# EUROPEAN PATENT SPECIFICATION

(11) **EP 4 498 241 B1**
(45) Date of publication and mention of the grant of the patent: **02.09.2026**
(21) Application number: 24167451.4
(22) Date of filing: 28.03.2024
(51) Int. Cl.: G06F 9/451, G06F 16/958, H04L 67/02

(54) **PAGE DISPLAY METHOD AND DEVICE, STORAGE MEDIUM**
SEITENANZEIGEVERFAHREN UND -VORRICHTUNG, SPEICHERMEDIUM
PROCÉDÉ ET DISPOSITIF D'AFFICHAGE DE PAGE, SUPPORT D'INFORMATIONS

(30) Priority: 27.07.2023 CN 202310935175
(43) Date of publication of application: 29.01.2025
(73) Proprietor: Beijing Xiaomi Mobile Software Co., Ltd., Beijing 100085 (CN)
(72) Inventor: XIAO, Hui, Beijing, 100085 (CN)
(74) Representative: Dehns Germany Partnerschaft mbB

(56) References cited:
- CN-A- 103 577 447
- CN-A- 110 198 246
- CN-A- 113 760 285
- CN-B- 106 547 806

## Description

### TECHNICAL FIELD

The present disclosure relates to the technical field of terminals, and in particular, to a page display method and device, an electronic device, and a storage medium.

### BACKGROUND

In order to save development costs, hybrid development has become a widely used software development method. In such case, more and more third-party applications are deployed to terminals to meet user needs.

In the related art, in order to enable a third-party application to display specialized/characteristic page based on different systems, the third-party developer needs to provide a data conversion interface designed for a corresponding terminal, so that the native system of a terminal can transmit system information to the third-party application through the data conversion interface to realize the characteristic page display. Related art can be found in CN113760285A, CN103577447A, CN106547806B. CN113760285A discloses a flexible page configuration and display method where a server generates and manages pages based on terminal and user attributes. Configurable components and display rules enable dynamic, personalized page rendering. The server selects and filters content, returning it to the terminal for display according to user context. CN103577447A discloses a method and apparatus for determining the type of a target page accessed by a mobile device. By analysing page information and device attributes, the system identifies the page type and adapts or converts the page for optimal display, enhancing user experience across different devices. CN106547806B a page loading method where a browser obtains device environment information using scripts, selects matching HTML and CSS files from a server, and renders the page accordingly. This approach reduces network traffic and improves loading speed by only downloading content tailored to the specific device environment.

### SUMMARY

Accordingly, the present invention provides a page display method, an electronic device and a non-transitory computer-readable storage medium in accordance with claims which follow. The invention is set out in the appended set of claims.

A first aspect of the present disclosure provides a page display method comprising the features of claim 1.

A second aspect of the present disclosure provides an electronic device comprising the features of claim 14.

A third aspect of the present disclosure provides a non-transitory computer-readable storage medium comprising the features of claim 15

It is to be understood that both the foregoing general description and the following detailed description are exemplary and explanatory only and are not restrictive of the present disclosure.

This section provides a summary of various implementations or examples of the technology described in the disclosure, and is not a comprehensive disclosure of the full scope or all features of the disclosed technology.

### BRIEF DESCRIPTION OF THE DRAWINGS

The accompanying drawings herein, which are incorporated into and form a part of the specification, illustrate embodiments consistent with the present disclosure, and serve, in conjunction with the specification, to explain the principles of the present disclosure.
FIG. 1 is a flowchart of a page display method according to an embodiment of the present disclosure;
FIG. 2 is a flowchart of an H5 page display method according to an embodiment of the present disclosure;
FIG. 3 is a flowchart of an IPtable configuration method according to an embodiment of the present disclosure;
FIG. 4 is a flowchart of a H5 page display method in an instant messaging application according to an embodiment of the present disclosure;
FIG. 5 is a block diagram of a page display device according to an embodiment of the present disclosure;
FIG. 6 is a block diagram of a page display device according to an embodiment of the present disclosure;
FIG. 7 is a schematic diagram of an electronic device according to an embodiment of the present disclosure.

### DETAILED DESCRIPTION

Exemplary embodiments will be described herein in detail, examples of which are represented in the accompanying drawings. When the following description are made with reference to the accompanying drawings, the same reference numerals in the different accompanying drawings indicate the same or similar elements unless otherwise indicated. The implementations described in the following embodiments do not represent all embodiments consistent with the present disclosure. Rather, they are only examples of devices and methods consistent with some aspects of the present disclosure as detailed in the appended claims.

The terms used in the present disclosure are used solely for the purpose of describing particular embodiments and are not intended to limit the present disclosure. The singular forms of "a" and "the" as used in the present disclosure and the appended claims are also intended to include the plural form, unless the context clearly indicates otherwise. It should also be understood that the term "and/or" as used herein refers to and includes any or all possible combinations of one or more of the associated listed items.

It should be understood that although the terms first, second, third, etc. may be used in the present disclosure to describe various pieces of information, such information should not be limited by these terms. These terms are used only to distinguish the same type of information from one another. For example, without departing from the scope of the present disclosure, first information may be referred to as second information, and similarly, second information may also be referred to as first information. Depending on the context, as used herein, the phrase "if' may be interpreted as "upon ......" or "when ......" or "in response to determining".

As mobile terminals become popular, native applications carried by a terminal system may not satisfy the needs of users. The demand for software development is increasing, and hybrid development has become the most popular mode of software development.

As such mode has been widely used, a large number of third-party developers have been involved in software development. Therefore, different aspects of needs of users can be satisfied quickly, and more and more third-party applications are deployed in user terminals.

However, applications such as third-party applications obtained by means of hybrid development usually cannot acquire system information of a terminal due to the limitations of factors such as data security, data format, and operating environment isolation, and thus such application cannot specifically display the page.

In the related art, in order to enable an application such as a third-party application to acquire the system information of the terminal, the developer of the application may configure a special data conversion interface for the system of the terminal, so that the application may acquire the system information from the native system of the terminal through the data conversion interface.

Taking a third-party application as an example, the third-party developer adopts the hybrid development mode to develop the third-party application, the third-party application runs based on JavaScript, and JavaScript runs in a separate JSContext (such as Webview container) and is isolated from the system of the terminal, therefore the third-party application cannot acquire the system information of the terminal after being installed on the terminal.

**If** the above-mentioned third-party developer is a developer "A", the third-party application developed by the developer "A" is an application "a", and the application "a" is installed on a terminal "X", the developer "A" needs to additionally develop a JavaScript interface (also called JSBridge interface) for the terminal "X" for acquiring the system information from the native running environment of the terminal "X", so that when the application "a" intends to display a page, it may acquire the system information of the terminal "X" through the interface, and then specifically displays the page based on the acquired system information, for example, it may acquire manufacturer information and operating system version information of the terminal "X", so that the application "a" may carry out adaptive layout according to the system version and display the manufacturer's logo and the like on the displayed page.

It can be seen that in the related art, if it needs to conduct a characteristic display in an application such as a third-party application, the corresponding developer needs to develop corresponding data conversion interfaces for different systems.

It is to be understood that terminals may be equipped with different types of operating systems, for example, a mobile terminal may be equipped with IOS system or Android system, and a fixed terminal may be equipped with Windows system or macOS system. Even if the terminals are equipped with the systems of the same type, different terminal manufacturers will carry out different optimization based on the same system framework, which makes the actual operating systems used by different manufacturers not the same, and furthermore, the manufacturers will also optimize the operating systems continuously during the use of the terminals, which results different versions of the operating system.

It can be seen that if the page display method in the related art is used, each developer needs to develop data conversion interfaces for different types, manufacturers, and versions of operating systems in order to make the application developed to conduct a characteristic display of a page, and the development cost is extremely high.

**In** view of above, the present disclosure provides a page display method, with which an application such as a third-party application can acquire system information of a terminal without using a data conversion interface and then conduct a characteristic display of a page.

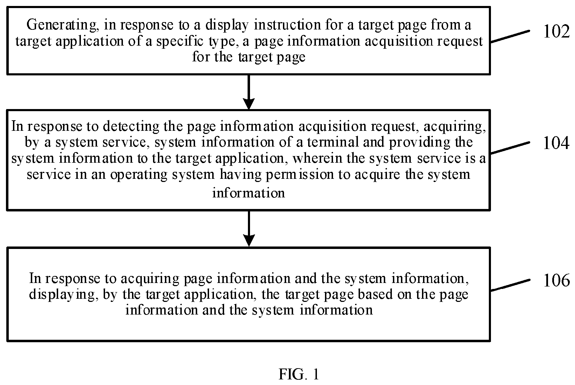

FIG. 1 is a flowchart of a page display method according to an embodiment of the present disclosure. As shown in FIG. 1, the method may include the following steps.

In step 102, in response to a display instruction for a target page from a target application of a specific type, a page information acquisition request for the target page is generated.

In the present disclosure, the specific type refers to an application such as a third-party application that cannot directly acquire system information of a terminal, for example, the above-mentioned application for which a corresponding developer needs to develop a data conversion interface in order to acquire the system information of the terminal. It is to be understood that as long as an application satisfies this definition, it can be regarded as the application belonging to the specific type in the present disclosure, and the specific type may be determined by a person skilled in the art according to an actual situation, which is not specifically limited by the present disclosure.

In the present disclosure, the terminal includes a system service for acquiring the system information. The system service belongs to a native component of the terminal and has permission to acquire the system information. Therefore, when an application of the specific type intends to display a page, the system service acquires the system information of the terminal, and provide the acquired system information to the application, so that the application conducts a characteristic display of the page based on the acquired system information.

It is to be understood that in the present disclosure, it is equivalent to pre-setting the system service for acquiring the system information. Therefore, in the present disclosure, the application of the specific type acquires the system information of the terminal even without using a data conversion interface developed for the terminal system, which avoids the problem of high development cost in the related art caused by the requirement of respectively developing data conversion interfaces for different terminal systems.

In the present disclosure, the application belonging to the specific type and intends to perform a page display operation is referred to as the target application, and the page that is to be displayed by the target application is referred to as the target page.

In the present disclosure, the target application installed in the terminal may generate the display instruction for the target page in different ways to instruct the terminal to generate the page information acquisition request for the target page.

In an embodiment, the target application may have a code scanning function, and thus the target application may generate the display instruction for the target page by means of scanning a two-dimensional code corresponding to the target page. For example, after the target application scans the two-dimensional code corresponding to the target page, it may acquire a URL (uniform resource locator) of the target page, and provide the URL to the terminal in the form of the display instruction, so that the terminal generates and initiates the page information acquisition request for the target page.

In another embodiment, the application page currently displayed by the target application may include a basis for generating the display instruction, for example, the application page displayed by the target application may include a website corresponding to the target page, and then the target application may generate the display instruction for the target page based on the website. In addition to the website, the basis may be in other forms, which is not specifically limited in the present disclosure.

The above embodiments are only examples, and the specific way in which the target application generates the display instruction for the target page may be determined by a person skilled in the art according to the actual needs, which is not specifically limited in the present disclosure.

In the present disclosure, after acquiring the page information, the terminal displays a corresponding page. Therefore, after the target application generates the display instruction for the target page, the terminal may generate the page information acquisition request for the target page in response to the instruction. For example, the target application may acquire the URL of the target page by scanning the two-dimensional code as described above, and based on the URL, the terminal may send the acquisition request to a server corresponding to the target page, so that the server returns the page information of the target page. Of course, the example is only schematic, and the specific way in which the page information of the target page is acquired may be determined by a person skilled in the art according to actual needs, which is not specifically limited in the present disclosure.

In step 104, in response to detecting the page information acquisition request, system information of a terminal is acquired by a system service, and the system information is provided to the target application, wherein the system service is a service in an operating system having permission to acquire the system information.

In the present disclosure, the page information acquisition request generated according to an indication of an application of the specific type may be monitored, so that when the corresponding page information acquisition request is detected, the system service acquires the system information of the terminal, which in turn may be used for a characteristic display of the target page.

In the present disclosure, the system service may have a monitoring function, and the system service may monitor the request generated according to the indication of the application of the specific type, and acquire the system information of the terminal when monitoring the request generated according to the indication of the target application. Then the system service may provide the acquired system information to the target application.

In the case where the system service determines, by a monitoring manner, whether the page information acquisition request is detected or not, the request monitored by the system service, generated according to the indication of the target application and used for characterizing the detection of the "page information acquisition request generated based on the display instruction of the target application" may be either the "page information acquisition request generated according to the indication of the target application" itself or an additional request generated specifically for indicating the acquisition of the system information.

In other words, the monitoring object of the system service may be either the page information acquisition request itself which is generated according to the indication of the application of the specific type or an additional request generated specifically for acquiring the system information. In the former case, the request monitored by the system service and generated according to the indication of the target application is the page information acquisition request generated according to the indication of the target application. In the latter case, the terminal may also generate the system information acquisition request for indicating the acquisition of the system information in the case of detecting the page information acquisition request generated according to the indication of the target application, and in this case, the request monitored by the system service and generated according to the indication of the target application is the system information acquisition request additionally generated, therefore when the system service has monitored the system information acquisition request, it means that the page information acquisition request is detected.

It is to be noted that the form of the above page information acquisition request or system information acquisition request may be determined according to actual needs, for example, the request may be a JS request, i.e., a JavaScript request, and for another example, it may also be a TCP request, which is not specifically limited in the present disclosure.

In the present disclosure, the terminal may be deployed with a request forwarding module, and in the case of generating the request generated according to the indication of the application of the specific type, the terminal may provide the request to the request forwarding module, so that the request forwarding module matches, under a request forwarding rule maintained by the terminal, the request generated. In the case where the request hits any of mapping relationships in the request forwarding rule, the request is forwarded based on the mapping relationship hit. It is to be noted that the mapping relationship in the request forwarding rule may be configured in advance so that the request may be monitored by the system service after the request is forwarded based on the hit mapping relationship.

In the present disclosure, the form in which the above request forwarding module is deployed may be determined according to actual needs, for example, the deployed request forwarding module may include a NetFilter kernel, and accordingly, the request forwarding rule maintained in the request forwarding module may include an IPtable maintained in the NetFilter kernel. Of course, the example is only schematic, and the specific form in which the request forwarding module is deployed and the way in which the request forwarding rule is maintained may be determined by a person skilled in the art according to actual needs, which is not specifically limited in the present disclosure.

In the present disclosure, a specific port may be configured in advance for the system service so that the system service may monitor whether there is the request generated according to the indication of the application of the specific type by monitoring the specific port. With this manner, the terminal, after generating the request, may send the request to the specific port, and the system service may monitor the specific port to acquire the request generated according to the indication of the application of the specific type. In the case of acquiring the request, the system service may acquire the system information and provide the system information to the application which indicate to generate the request.

In the present disclosure, when displaying the target page, the target application may acquire the page information of the target page. In order to acquire the page information, it may send the page information acquisition request to a corresponding server. It can be seen that in the case of additionally generating the system information acquisition request to indicate the system service to acquire the system information, the terminal correspondingly generates two requests, one of which is a request sent outwardly for acquiring the page information, i.e., the page information acquisition request, and the other one of which is a request sent inwardly for acquiring the system information, i.e., the system information acquisition request. For ease of understanding, the process of how the system service is instructed to acquire the system information in this case is described.

**In** an embodiment, the system information acquisition request for indicating to acquire the system information may be generated in the case where the page information acquisition request generated according to the indication of the target application is detected, and the generated system information acquisition request is sent to the system service to indicate the system service to acquire the system information.

**In** an embodiment, the request forwarding rule may be deployed in the terminal for forwarding various requests generated. In this case, the present disclosure may configure the request forwarding rule so that when the terminal has detected the above acquisition request, the system service acquires the system information of the terminal.

**In** an embodiment, the request forwarding rule deployed in the terminal may include sending a request initiated according to the indication of the application of the specific type for acquiring the system information to the system service. In this case, the terminal may forward the system information acquisition request to the system service according to the request forwarding rule, and the system service may acquire the system information of the terminal upon receiving the acquisition request, and provide the acquired system information to the target application.

**In** an embodiment, the system service may have the function of configuring the request forwarding rule, based on which, after the system service is deployed to the terminal, the system service may configure the request forwarding rule of the terminal, so that the request forwarding rule configured by the system service may be used for "forwarding the request initiated according to the indication of the application belonging to the specific type and used for acquiring the system information to the system service".

**In** an embodiment, in the case where the request forwarding rule is configured by the system service, the system service may configure the request forwarding rule by adding a "mapping relationship between an IP and a port" in the request forwarding rule. For example, the system service may determine a specific port as a destination port among all ports of the terminal. In this case, the system service may configure the mapping relationship between "a terminal IP of the terminal and the specific port in the terminal" in the request forwarding rule deployed in the terminal, so that the request using the terminal IP as a resource IP will use the above specific port as the destination port. In other words, the mapping relationship is used to characterize that "the destination port of the request that uses the terminal IP as the source IP is the above specific port". In this case, when generating the system information acquisition request, the terminal may use the terminal IP as the source IP, so that the system information acquisition request is sent to the configured specific port, and accordingly, the system service may acquire, by monitoring the specific port, the system information acquisition request initiated according to the indication of the target application and sent based on the above request forwarding rule.

It is to be understood that in this method, the "rule configuration function" and the "port monitoring function" of the system service are used to send the acquisition request initiated according to the indication of the application of the specific type to the system service to indicate the system service to acquire the system information.

**In** an embodiment, the request forwarding rule may be deployed in a firewall module of the terminal. Therefore, when the request forwarding rule is configured by the system service, the system service may send a configuration request to the firewall module of the terminal, so that the firewall module may add the above mapping relationship between "the terminal IP of and the specific port" in the request forwarding rule deployed. For example, the firewall module may be the NetFilter kernel module as described above, and the request forwarding rule may be an IPtable maintained in the module. The IPtable records a large number of mapping relationships between IPs and ports for processing the sent or received requests. In this case, the system service may send the configuration request to the NetFilter kernel module to record the above mapping relationship between the terminal IP and the specific port into the IPtable maintained.

The above embodiments are only examples, and how the request forwarding rule is deployed in the terminal and how the deployed request forwarding rule is configured may be determined by a person skilled in the art according to actual situations, which is not specifically limited by the present disclosure.

**In** the present disclosure, in addition to configuring the request forwarding rule to send the acquisition request initiated according to the indication of the application of the specific type to the system service to indicate the system service to acquire the system information, the system service may be indicated to acquire the system information in other ways. For example, when detecting the above acquisition request, the terminal may directly send a system information acquisition instruction to the system service to indicate the system service to acquire the system information of the terminal. Of course, this example is only schematic, and the specific manner of indicating the system service to acquire the system information of the terminal may be determined by a person skilled in the art according to actual needs, which is not specifically limited in the present disclosure.

In step 106, in response to acquiring the page information and the system information, the target page is displayed by the third-party application based on the page information and the system information.

In the present disclosure, in the case where the page information of the target page is acquired by the page information acquisition request and the system information is acquired by the system service, the target page may be generated and displayed by the target application based on the acquired page information and system information.

In the present disclosure, the acquired page information may include text information, layout information, picture information, etc., of the target page. Of course, the example is only schematic, and the specific information included in the acquired page information may be determined by a person skilled in the art according to the target page that is to be displayed by the target application, which is not specifically in the present disclosure.

In the present disclosure, the system information acquired by the system service may be any information related to the operating system of the terminal. For example, the acquired system information may include: manufacturer information of the terminal, version information of the operating system carried by the terminal, and characteristic page information designed by the terminal manufacturer for the operating system. Of course, the example is only schematic, and the specific information included in the acquired system information may be determined by a person skilled in the art according to actual needs, which is not specifically limited in the present disclosure.

In the case where the system information includes the above characteristic page information, the characteristic page information may be layout information designed by the manufacturer for different types of pages, and after the terminal receives the page information, the system service may determine a target type of the target page based on the page information, and then determine the layout information designed by the manufacturer for the page of the target type. On this basis, the target application may display the page based on the layout information after acquiring the system information. Of course, the example is only schematic, and the specific information included in the characteristic page information may be determined by a person skilled in the art according to actual needs, which is not specifically in the present disclosure.

It is to be noted that in the present disclosure, the system service may be deployed to the terminal in different forms. For example, the native application in the terminal usually has the ability and permission to acquire the system information, therefore the system service may be the native application installed in the terminal. For another example, the system service may be a local information acquisition module deployed in a system layer, and since units deployed in the system layer all have the ability and permission to acquire the system information, the local information acquisition module may be acted by any component or application deployed in the system layer. Of course, the above example is only schematic. It is to be understood that any component having the ability to acquire the system information may serve as the system service in the present disclosure, and the specific component or application which the system service is may be determined by a person skilled in the art according to actual situations, which is not specifically limited in the present disclosure.

It is to be noted that the execution subject of the technical solution of the present disclosure may be any type of terminal, for example, the electronic device may be a mobile terminal such as a smartphone, a tablet computer, or a fixed terminal such as a smart TV, a PC (Personal Computer), or the like. It is to be understood that any terminal capable of installing a particular type of application may be used as the execution subject of the present disclosure, and the specific type of terminal to be used as the execution subject of the technical solution of the present disclosure may be determined by a person skilled in the art according to actual needs, which is not specifically limited in the present disclosure.

As can be seen from the above technical solution that in the present disclosure, the system service for acquiring the system information is pre-deployed in the terminal, therefore when intending to display a page, the application of the specific type in the terminal may acquire the system information of the terminal through the system service, and then conduct a characteristic display of the page based on the acquired system information.

It is to be understood that the present disclosure accordingly discloses a method for displaying a page based on system characteristics on an application such as a third-party application, which is applicable to various operating systems, which avoids the problem of high development cost in the related art caused by the requirement of developing corresponding data conversion interfaces for different operating systems to enable an application such as a third-party application to conduct a characteristic display of the page.

Hereinafter, the technical solution of the present disclosure is introduced as an example of that an instant messaging application in a smartphone scans a two-dimensional code to open an HTML5 (HyperText Markup Language 5) page.

For convenience, the HTML5 page will be referred to as H5 page.

Before describing the technical solution of the present disclosure, the H5 page display method is briefly introduced by taking that the H5 page is displayed by scanning a code as an example.

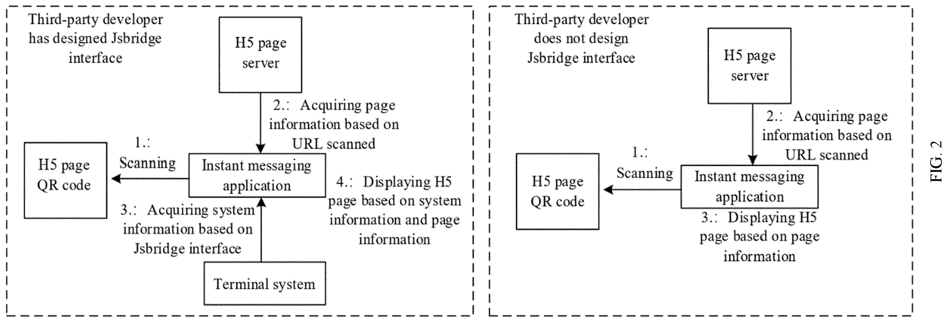

FIG. 2 is a flowchart of an H5 page display method according to an embodiment of the present disclosure. As shown in FIG. 2, after the instant messaging application is launched, the smartphone may scan the two-dimensional code of the H5 page through the code scanning function of the instant messaging application to identify the URL of the H5 page, based on which the terminal may send the page information acquisition request for the H5 page to the corresponding server through the URL. In addition, if the developer of the instant messaging application has designed a corresponding JSbridge interface for the smartphone, the system information of the smartphone may be acquired through the JSbridge interface so as to conduct a characteristic display of the H5 page. On the contrary, if the developer of the instant messaging application has not designed a corresponding JSbridge interface for the smartphone, the system information of the smartphone cannot be acquired, in this case, only a normal display instead of a characteristic display can be conducted.

It is to be noted that the technical solution of the present disclosure may include two phases, namely, a configuration phase and a display phase. In the following, the two phases are described respectively.

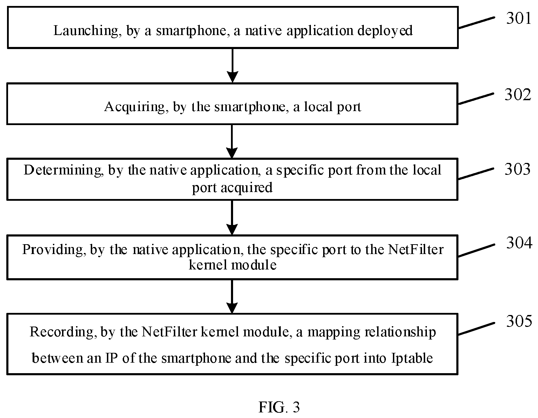

FIG. 3 is a flowchart of an IPtable configuration method according to an embodiment of the present disclosure. As shown in FIG. 3, the method may include the following steps.

In step 301, a smartphone launches a native application deployed.

In an embodiment, a native application for acquiring system information may be deployed in the smartphone as the above system service. The native application may be launched when the smartphone is powered on to configure the forwarding rule.

In step 302, the smartphone acquires a local port.

In an embodiment, the smartphone may acquire available local ports and use at least one of the available local ports as a specific port to be monitored by the native application, so that the native application determines whether there is the page information acquisition request initiated according to the indication of the third-party application.

**In** step 303, the native application determines the specific port from the acquired local ports.

For example, if the available local ports acquired include ports 1 to 3, the port 1 may be used as the specific port so that the native application may monitor the port 1.

**In** step 304, the native application provides the specific port to a NetFilter kernel module.

**In** an embodiment, after the native application has determined the specific port, it may provide the specific port to the NetFilter kernel module so that the NetFilter kernel module adds a mapping relationship about the specific port in the maintained IPtable.

**In** step 305, the NetFilter kernel module records the mapping relationship between the phone IP and the specific port into the IPtable.

Following the above example, the mapping relationship recorded in the IPtable may be "source IP: phone IP; destination port: port 1".

After the configuration is completed, it may be used to acquire the system information of the smartphone when any third-party application intends to display a page.

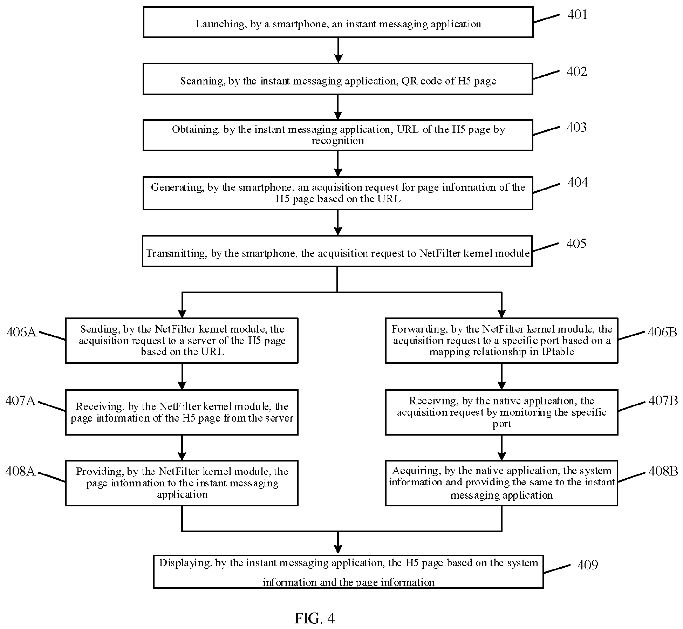

FIG. 4 is a flowchart of an H5 page display method in an instant messaging application according to an embodiment of the present disclosure. As shown in FIG. 4, the method may include the following steps.

**In** step 401, a smartphone launches the instant messaging application.

**In** step 402, the instant messaging application scans a two-dimensional code of the H5 page.

**In** an embodiment, the instant messaging application may have a code scanning function. When a user uses the instant messaging application, any two-dimensional code may be scanned by calling a camera of the smartphone to open a corresponding page.

**In** step 403, the instant messaging application identifies and acquires URL of the H5 page.

In an embodiment, the two-dimensional code may include URL information of the H5 page, and after scanning the two-dimensional code, the instant messaging application may identify and acquire the URL of the H5 page.

In step 404, the smartphone generates a page information acquisition request for the H5 page based on the URL.

In an embodiment, after acquiring the URL of the H5 page, the smartphone may generate the page information acquisition request for the H5 page based on the URL.

In step 405, the smartphone transmits the acquisition request to the NetFilter kernel module.

In an embodiment, the NetFilter kernel module may be deployed in the smartphone as a firewall, as presented in FIG. 3. An IPtable is maintained in the NetFilter kernel module for recording request forwarding rules. In this case, the acquisition request is to be transmitted to the NetFilter kernel module, so that the NetFilter kernel module forwards the acquisition request.

In step 406A, the NetFilter kernel module sends the acquisition request to a server of the H5 page based on the URL.

In an embodiment, the NetFilter kernel module sends the acquisition request to the corresponding server based on the information recorded in the IPtable and the URL, and the server returns the page information of the H5 page.

In step 407A, the NetFilter kernel module receives the page information of the H5 page returned by the server.

In step 408A, the NetFilter kernel module provides the page information to the instant messaging application.

In an embodiment, the NetFilter kernel module, upon receiving the page information, may provide the page information to the instant messaging application for displaying the H5 page.

In step 406B, the NetFilter kernel module forwards the acquisition request to the specific port based on the mapping relationship in the IPtable.

In an embodiment, the NetFilter kernel module also forwards the acquisition request to the specific port according to the mapping relationship in the IPtable.

Following the example shown in FIG. 3, the IPtable records the mapping relationship of "source IP: phone IP; destination port: port 1", and the source IP of the acquisition request initiated by the smartphone is the mobile phone IP, therefore the acquisition request is also forwarded to the port 1.

**In** step 407B, the native application monitors the specific port and receives the acquisition request.

**In** an embodiment, after completing the configuration in the manner shown in FIG. 3, the native application may monitor the configured specific port to determine whether there is the acquisition request generated according to the indication of the third-party application.

**In** step 408B, the native application acquires the system information and provides the same to the instant messaging application.

Following the above example, the native application may monitor the port 1, and therefore, may receive the acquisition request forwarded to the port 1 based on the Iptable. In this case, the native application may acquire the system information and provide the acquired system information to the instant messaging application.

**In** step 409, the instant messaging application displays the H5 page based on the system information and the page information.

**In** an embodiment, after acquiring the page information of the H5 page and the system information provided by the native application, the instant messaging application may conduct a characteristic display of the H5 page based on the page information and the system information. For example, the system information may include manufacturer information, system version information, and the like, then the instant messaging application, when displaying the H5 page, may display the manufacturer's logo, the system version number, and other information on the page.

As can be seen from the above technical solution, in the present disclosure, the native application for acquiring the system information may be deployed in the terminal. The native application may have a rule configuration function and a port monitoring function. The native application may configure a specific port as a "destination port of an acquisition request initiated according to an indication of a third-party application", and monitor the specific port to determine whether there is the acquisition request initiated according to the indication of the third-party application and thus to determine whether there is a need for acquiring the system information. In the case where the monitoring result indicates that there is the acquisition request, the system information may be acquired and may be provided to the third-party application, so that the third-party application conducts a characteristic display of the page based on the system information, which avoids the problem of high development cost in the related art caused by the requirement of respectively developing data conversion interfaces for different terminal systems to enable the third-party application to conduct the characteristic display of the page.

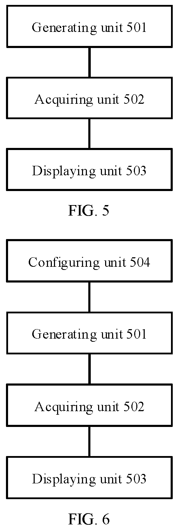

FIG. 5 is a block diagram of a page display device according to an embodiment of the present disclosure. Referring to FIG. 5, the device includes a generating unit 501, an acquiring unit 502, and a displaying unit 503.

The generating unit 501 is configured to generate, in response to a display instruction for a target page from a target application of a specific type, a page information acquisition request for the target page;

The acquiring unit 502 is configured to, in response to detecting the page information acquisition request, acquire, by a system service, system information of a terminal and provide the system information to the target application, wherein the system service is a service in an operating system having permission to acquire the system information; and

The displaying unit 503 is configured to, in response to acquiring page information and the system information, display, by the target application, the target page based on the page information and the system information.

In an embodiment, the acquiring unit 502 is further configured to:
monitor, by the system service, a request generated according to an indication of an application of the specific type;
in response to having monitored a request generated according to an indication of the target application, acquire, by the system service, the system information of the terminal; and
provide, by the system service, the system information acquired to the target application.

In an embodiment:
the request that has been monitored by the system service and is generated according to the indication of the target application is the page information acquisition request; or
the generating unit 501 is further configured to generate, in response to detecting the page information acquisition request, a system information acquisition request for indicating acquisition of the system information, and the request that has been monitored by the system service and is generated according to the indication of the target application is the system information acquisition request.

In an embodiment, the page information acquisition request or the system information acquisition request is a JS request.

In an embodiment, the device further includes a configuring unit 504, configured to:
provide the request generated according to the indication of the application of the specific type to a request forwarding module, so that the request forwarding module matches, under a request forwarding rule maintained by the terminal, the request generated; and
in response to that the request hits any of mapping relationships in the request forwarding rule, forward the request based on the mapping relationship hit.

In an embodiment:
the request forwarding module includes a NetFilter kernel, and
the request forwarding rule includes an IPtable maintained in the NetFilter kernel.

In an embodiment:
the generating unit 501 is further configured to send the request generated according to the indication of the application of the specific type to a specific port pre-configured for the system service; and
the acquiring unit 502 is further configured to acquire, by the system service, the request generated according to the indication of the application of the specific type by monitoring the specific port.

In an embodiment, the generating unit 501 is further configured to:
generate, in response to detecting the page information acquisition request, a system information acquisition request for indicating acquisition of the system information; and
indicate the system service to acquire the system information by sending the system information acquisition request generated to the system service.

In an embodiment:
a request forwarding rule deployed in the terminal includes: sending, to the system service, a request initiated according to an indication of an application of the specific type for acquiring the system information;
the generating unit 501 is further configured to send the system information acquisition request to the system service based on the request forwarding rule; and
the acquiring unit 502 is further configured to: in response to receiving the system information acquisition request, acquiring, by the system service, the system information of the terminal.

In an embodiment, the acquiring unit 502 is further configured to:
in response to detecting the page information acquisition request, send a system information acquisition instruction to the system service to indicate the system service to acquire the system information of the terminal.

In an embodiment, the system service is a local information acquisition module deployed in a system layer, or a native application of the terminal.

In an embodiment, the system information includes at least one of:
manufacturer information of the terminal;
version information of the operating system carried by the terminal; and
characteristic page information designed by a manufacturer of the terminal for the operating system.

In an embodiment:
the display instruction is generated by the target application by scanning a two-dimensional code corresponding to the target page; or
the display instruction is generated by the target application based on a website, corresponding to the target page, in an application page of the target application.

In an embodiment, the specific type includes a third-party application.

FIG. 6 is a block diagram of another page display device according to an embodiment of the present disclosure, which is on the basis of the embodiment shown in FIG. 5. The device further includes a configuring unit 504.

In an embodiment, the device further includes:
the configuring unit 504, configured to configure, by the system service, the request forwarding rule of the terminal, and according to the request forwarding rule configured by the system service, send, to the system service, the request initiated according to the indication of the application of the specific type for acquiring the system information of the terminal.

In an embodiment:
the configuring unit 504 is further configured to configure, by the system service, a mapping relationship between a terminal IP of the terminal and a specific port in the terminal in the request forwarding rule of the terminal, so that the terminal forwards, based on the mapping relationship, the request generated for acquiring the system information of the terminal; and
the acquiring unit 502 is further configured to: monitor, by the system service, the specific port, and in response to having monitored the request for acquiring the system information of the terminal, acquire the system information.

**In** an embodiment, the configuring unit 504 is further configured to send, by the system service, a configuration request to a firewall module of the terminal, so that the firewall module adds, in the request forwarding rule deployed, the mapping relationship between the terminal IP of the terminal and the specific port in the terminal.

As the device embodiment corresponds substantially to the method embodiment, it may refer to the description of the method embodiment for relevant description of the device embodiment. The above-described device embodiment is merely schematic, in which the units illustrated as separated components may or may not be physically separated, and components displayed as units may or may not be physical units, i.e., they may be located in a single place or they may also be distributed to a plurality of network units. Some or all of these modules may be selected to achieve the purpose of the solution of the present disclosure according to actual needs, which may be understood and implemented without creative labor by a person skilled in the art.

Accordingly, the present disclosure also provides a page display device including: a processor; and a memory for storing executable instructions of the processor. The processor is configured to implement the page display method according to any of the above embodiments, for example, the method may include: generating, in response to a display instruction for a target page from a target application of a specific type, a page information acquisition request for the target page; in response to detecting the page information acquisition request, acquiring, by a system service, system information of a terminal and providing the system information to the target application, wherein the system service is a service in an operating system having permission to acquire the system information; and in response to acquiring page information and the system information, displaying, by the target application, the target page based on the page information and the system information.

Accordingly, the present disclosure also provides an electronic device including a memory and one or more programs stored in the memory. The one or more programs, when being executed by one or more processors, implement the page display method according to any of the above embodiments, for example, the method may include: generating, in response to a display instruction for a target page from a target application of a specific type, a page information acquisition request for the target page; in response to detecting the page information acquisition request, acquiring, by a system service, system information of a terminal and providing the system information to the target application, wherein the system service is a service in an operating system having permission to acquire the system information; and in response to acquiring page information and the system information, displaying, by the target application, the target page based on the page information and the system information.

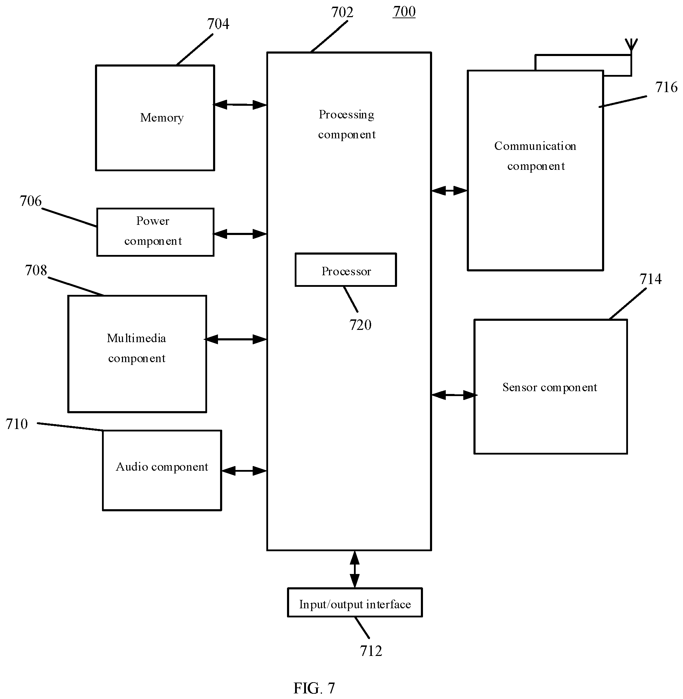

FIG. 7 is a block diagram of an electronic device 700 for implementing a page display method according to an embodiment. For example, the device 700 may be a mobile phone, a computer, a digital broadcasting terminal, a messaging device, a game console, a tablet device, a medical device, a fitness device, a personal digital assistant, or the like.

Referring to FIG. 7, the device 700 may include one or more of a processing component 702, a memory 704, a power component 706, a multimedia component 708, an audio component 710, an input/output (I/O) interface 712, a sensor component 714, and a communication component 716.

The processing component 702 generally controls the overall operations of the device 700, such as operations associated with display, telephone calls, data communications, camera operations, and recording operations. The processing component 702 may include one or more processors 720 to execute instructions to complete all or part of the steps of the foregoing method. In addition, the processing component 702 may include one or more modules to facilitate interaction between the processing component 702 and other components. For example, the processing component 702 may include a multimedia module to facilitate the interaction between the multimedia component 708 and the processing component 702.

The memory 704 is configured to store various types of data to support the operation at the device 700. Examples of these data include instructions for any application or method operating on the device 700, contact data, phone book data, messages, pictures, videos and the like. The memory 704 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 706 provides power to various components of the device 700. The power component 706 may include a power management system, one or more power supplies, and other components associated with generating, managing, and distributing power for the device 700.

The multimedia component 708 includes a screen that provides an output interface between the device 700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 708 includes a front camera and/or a rear camera. When the device 700 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 710 is configured to output and/or input audio signals. For example, the audio component 710 includes a microphone (MIC), and when the device 700 is in an operation mode, such as a call mode, a recording mode, and a voice recognition mode, the microphone is configured to receive an external audio signal. The received audio signal can be further stored in the memory 704 or sent via the communication component 716. In some embodiments, the audio component 710 further includes a speaker for outputting audio signals.

The I/O interface 712 provides an interface between the processing component 702 and a peripheral interface module. The above-mentioned peripheral interface module may be a keyboard, a click wheel, a button, and the like. These buttons may include but are not limited to home button, volume button, start button, and lock button.

The sensor component 714 includes one or more sensors for providing the device 700 with various aspects of state evaluation. For example, the sensor component 714 can detect the on/off status of the device 700 and the relative positioning of components. For example, the component is a display and keypad of the device 700. The sensor component 714 can also detect the position change of the device 700 or a component of the device 700, the presence or absence of contact between the user and the device 700, the orientation or acceleration/deceleration of the device 700, and the temperature change of the device 700. The sensor component 714 may include a proximity sensor configured to detect the presence of nearby objects when there is no physical contact. The sensor component 714 may also include a light sensor, such as a CMOS or CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as WiFi, 2G, or 3G, 4G LTE, 5G NR (New Radio) or a combination thereof. In an embodiment, the communication component 716 receives a broadcast signal or broadcast related information from an external broadcast management system via a broadcast channel. In an embodiment, the communication component 716 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the device 700 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An embodiment also provides a non-transitory computer-readable storage medium including instructions, such as the memory 704 including instructions, and the instructions may be executed by the processor 720 of the device 700 to complete the foregoing method. For example, the non-transitory computer-readable storage medium may be ROM, random access memory (RAM), CD-ROM, magnetic tape, floppy disk, optical data storage device and the like.

## Claims

1. A page display method performed by a terminal comprising a target application of a specific type and a system service, wherein the application of the specific type cannot access system information, comprising:
generating (102), in response to a display instruction for a target page from the target application of the specific type, a page information acquisition request for the target page;
in response to detecting the page information acquisition request, acquiring (104), by the system service, system information of the terminal and providing the system information to the target application, wherein the system service is a service in an operating system having permission to acquire the system information; and
in response to acquiring page information and the system information, displaying (106), by the target application, the target page based on the page information and the system information.

2. The method according to claim 1, wherein in response to detecting the page information acquisition request, acquiring (104), by the system service, the system information of the terminal and providing the system information to the target application comprises:
monitoring, by the system service, a request generated according to an indication of an application of the specific type;
in response to having monitored a request generated according to an indication of the target application, acquiring, by the system service, the system information of the terminal; and
providing, by the system service, the system information acquired to the target application.

3. The method according to claim 2, wherein
the request that has been monitored by the system service and is generated according to the indication of the target application is the page information acquisition request; or
the method further comprises: generating, in response to detecting the page information acquisition request, a system information acquisition request for indicating acquisition of the system information, and the request that has been monitored by the system service and is generated according to the indication of the target application is the system information acquisition request,
preferably the page information acquisition request or the system information acquisition request is a JS request.

4. The method according to claim 2 or 3, further comprising:
providing the request generated according to the indication of the application of the specific type to a request forwarding module, so that the request forwarding module matches, under a request forwarding rule maintained by the terminal, the request generated; and
in response to that the request hits a mapping relationship in the request forwarding rule, forwarding the request based on the mapping relationship,
preferably the request forwarding module comprises a NetFilter kernel, and the request forwarding rule comprises an IPtable maintained in the NetFilter kernel.

5. The method according to any one of claims 2-4, further comprising:
sending the request generated according to the indication of the application of the specific type to a specific port pre-configured for the system service;
wherein monitoring, by the system service, the request generated according to the indication of the application of the specific type comprises: acquiring, by the system service, the request generated according to the indication of the application of the specific type by monitoring the specific port.

6. The method according to any one of the preceding claims, further comprising:
generating, in response to detecting the page information acquisition request, a system information acquisition request for indicating acquisition of the system information; and
indicating the system service to acquire the system information by sending the system information acquisition request generated to the system service.

7. The method according to claim 6, wherein
a request forwarding rule deployed in the terminal comprises: sending, to the system service, a request initiated according to an indication of an application of the specific type for acquiring the system information;
sending the system information acquisition request generated to the system service comprises: sending the system information acquisition request to the system service based on the request forwarding rule; and
acquiring, by the system service, the system information of the terminal comprises: in response to receiving the system information acquisition request, acquiring, by the system service, the system information of the terminal.

8. The method according to claim 7, further comprising:
configuring, by the system service, the request forwarding rule of the terminal, and according to the request forwarding rule configured by the system service, sending, to the system service, the request initiated according to the indication of the application of the specific type for acquiring the system information of the terminal.

9. The method according to claim 8, wherein
configuring, by the system service, the request forwarding rule of the terminal comprises: configuring, by the system service, a mapping relationship between a terminal IP of the terminal and a specific port in the terminal in the request forwarding rule of the terminal, so that the terminal forwards, based on the mapping relationship, the request generated for acquiring the system information of the terminal; and
in response to receiving the system information acquisition request, acquiring, by the system service, the system information of the terminal comprises: monitoring, by the system service, the specific port, and in response to having monitored the request for acquiring the system information of the terminal, acquiring the system information.

10. The method according to claim 9, wherein configuring, by the system service, the mapping relationship between the terminal IP of the terminal and the specific port in the terminal in the request forwarding rule of the terminal comprises:
sending, by the system service, a configuration request to a firewall module of the terminal, so that the firewall module adds, in the request forwarding rule deployed, the mapping relationship between the terminal IP of the terminal and the specific port in the terminal.

11. The method according to any one of the preceding claims, wherein in response to detecting the page information acquisition request, acquiring, by the system service, the system information of the terminal comprises:
in response to detecting the page information acquisition request, sending a system information acquisition instruction to the system service to indicate the system service to acquire the system information of the terminal.

12. The method according to any one of the preceding claims, wherein the system service is a local information acquisition module deployed in a system layer, or a native application of the terminal,
and/or
wherein the system information comprises at least one of: manufacturer information of the terminal; version information of the operating system carried by the terminal; and characteristic page information designed by a manufacturer of the terminal for the operating system,
and/or
wherein the specific type comprises a third-party application.

13. The method according to any one of the preceding claims, wherein
the display instruction is generated by the target application by scanning a two-dimensional code corresponding to the target page; or
the display instruction is generated by the target application based on a website, corresponding to the target page, in an application page of the target application.

14. An electronic device, comprising:
a processor; and
a memory storing instructions executable by the processor;
wherein the instructions, when being executed by the processor, cause the processor to implement the method according to any one of claims 1 to 13.

15. A non-transitory computer-readable storage medium having stored thereon instructions that, when being executed by a processor, cause the processor to implement the method according to any one of claims 1 to 13.

## Patentansprüche

1. Seitenanzeigeverfahren, das von einem Endgerät durchgeführt wird, das eine Ziel-Anwendung eines bestimmten Typs und einen Systemdienst umfasst, wobei die Anwendung des bestimmten Typs nicht auf Systeminformationen zugreifen kann, umfassend:
Erzeugen (102) einer Seiteninformationsabfrageanforderung für eine Zielseite als Reaktion auf eine Anzeigeanweisung für die Zielseite von der Ziel-Anwendung des bestimmten Typs;
als Reaktion auf das Erkennen der Seiteninformationsabfrageanforderung, Erfassen (104) der Systeminformationen des Endgeräts durch den Systemdienst und Bereitstellen der Systeminformationen für die Ziel-Anwendung, wobei der Systemdienst ein Dienst in einem Betriebssystem ist, der die Berechtigung zum Erfassen der Systeminformationen besitzt; und
als Reaktion auf das Erfassen von Seiteninformationen und den Systeminformationen, Anzeigen (106) der Zielseite durch die Ziel-Anwendung basierend auf den Seiteninformationen und den Systeminformationen.

2. Verfahren nach Anspruch 1, wobei das Erfassen (104) der Systeminformationen des Endgeräts durch den Systemdienst und das Bereitstellen der Systeminformationen für die Ziel-Anwendung als Reaktion auf das Erkennen der Seiteninformationsabfrageanforderung umfasst:
Überwachen einer Anforderung, die gemäß einer Anweisung einer Anwendung des bestimmten Typs generiert wurde, durch den Systemdienst;
als Reaktion auf das Überwachen einer Anforderung, die gemäß einer Anweisung der Ziel-Anwendung generiert wurde, Erfassen der Systeminformationen des Endgeräts durch den Systemdienst; und
Bereitstellen der erfassten Systeminformationen für die Ziel-Anwendung durch den Systemdienst.

3. Verfahren nach Anspruch 2, wobei
die vom Systemdienst überwachte und gemäß der Anweisung der Ziel-Anwendung generierte Anforderung die Seiteninformationsabfrageanforderung ist; oder
das Verfahren weiterhin umfasst: Generieren einer Systeminformationsabfrageanforderung zur Anzeige des Erfassens der Systeminformationen als Reaktion auf das Erkennen der Seiteninformationsabfrageanforderung, und die vom Systemdienst überwachte und gemäß der Anweisung der Ziel-Anwendung generierte Anforderung ist die Systeminformationsabfrageanforderung,
vorzugsweise ist die Seiteninformationsabfrageanforderung oder die Systeminformationsabfrageanforderung eine JS-Anforderung.

4. Verfahren nach Anspruch 2 oder 3, weiterhin umfassend:
Bereitstellen der gemäß der Anweisung der Anwendung des bestimmten Typs generierten Anforderung für ein Anforderungsweiterleitungsmodul, sodass das Anforderungsweiterleitungsmodul die generierte Anforderung anhand einer vom Endgerät verwalteten Anforderungsweiterleitungsregel abgleicht; und
als Reaktion darauf, dass die Anforderung eine Abbildungsbeziehung in der Anforderungsweiterleitungsregel trifft, Weiterleiten der Anforderung basierend auf der Abbildungsbeziehung,
vorzugsweise umfasst das Anforderungsweiterleitungsmodul einen NetFilter-Kernel, und die Anforderungsweiterleitungsregel umfasst eine IPtable, die im NetFilter-Kernel verwaltet wird.

5. Verfahren nach einem der Ansprüche 2-4, weiterhin umfassend:
Senden der gemäß der Anweisung der Anwendung des bestimmten Typs generierten Anforderung an einen spezifischen Port, der für den Systemdienst vorkonfiguriert ist;
wobei das Überwachen der gemäß der Anweisung der Anwendung des bestimmten Typs generierten Anforderung durch den Systemdienst umfasst: Erfassen der gemäß der Anweisung der Anwendung des bestimmten Typs generierten Anforderung durch Überwachen des spezifischen Ports.

6. Verfahren nach einem der vorherigen Ansprüche, weiterhin umfassend:
Generieren einer Systeminformationsabfrageanforderung zur Anzeige des Erfassens der Systeminformationen als Reaktion auf das Erkennen der Seiteninformationsabfrageanforderung; und
Anweisen des Systemdienstes zum Erfassen der Systeminformationen durch Senden der generierten Systeminformationsabfrageanforderung an den Systemdienst.

7. Verfahren nach Anspruch 6, wobei
eine im Endgerät bereitgestellte Anforderungsweiterleitungsregel umfasst: Senden einer gemäß einer Anweisung einer Anwendung des bestimmten Typs initiierten Anforderung zum Erfassen der Systeminformationen an den Systemdienst;
das Senden der generierten Systeminformationsabfrageanforderung an den Systemdienst umfasst: Senden der Systeminformationsabfrageanforderung an den Systemdienst basierend auf der Anforderungsweiterleitungsregel; und
das Erfassen der Systeminformationen des Endgeräts durch den Systemdienst umfasst: als Reaktion auf den Empfang der Systeminformationsabfrageanforderung, Erfassen der Systeminformationen des Endgeräts durch den Systemdienst.

8. Verfahren nach Anspruch 7, weiterhin umfassend:
Konfigurieren der Anforderungsweiterleitungsregel des Endgeräts durch den Systemdienst, und gemäß der vom Systemdienst konfigurierten Anforderungsweiterleitungsregel, Senden der gemäß der Anweisung der Anwendung des bestimmten Typs initiierten Anforderung zum Erfassen der Systeminformationen des Endgeräts an den Systemdienst.

9. Verfahren nach Anspruch 8, wobei
das Konfigurieren der Anforderungsweiterleitungsregel des Endgeräts durch den Systemdienst umfasst: Konfigurieren einer Abbildungsbeziehung zwischen einer Endgerät-IP des Endgeräts und einem spezifischen Port im Endgerät in der Anforderungsweiterleitungsregel des Endgeräts, sodass das Endgerät die generierte Anforderung zum Erfassen der Systeminformationen des Endgeräts basierend auf der Abbildungsbeziehung weiterleitet; und
das Erfassen der Systeminformationen des Endgeräts durch den Systemdienst als Reaktion auf den Empfang der Systeminformationsabfrageanforderung umfasst: Überwachen des spezifischen Ports durch den Systemdienst und, als Reaktion auf das Überwachen der Anforderung zum Erfassen der Systeminformationen des Endgeräts, Erfassen der Systeminformationen.

10. Verfahren nach Anspruch 9, wobei das Konfigurieren der Abbildungsbeziehung zwischen der Endgerät-IP des Endgeräts und dem spezifischen Port im Endgerät in der Anforderungsweiterleitungsregel des Endgeräts durch den Systemdienst umfasst:
Senden einer Konfigurationsanforderung durch den Systemdienst an ein Firewall-Modul des Endgeräts, sodass das Firewall-Modul die Abbildungsbeziehung zwischen der Endgerät-IP des Endgeräts und dem spezifischen Port im Endgerät in der bereitgestellten Anforderungsweiterleitungsregel hinzufügt.

11. Verfahren nach einem der vorherigen Ansprüche, wobei das Erfassen der Systeminformationen des Endgeräts durch den Systemdienst als Reaktion auf das Erkennen der Seiteninformationsabfrageanforderung umfasst:
Senden einer Systeminformationserfassungsanweisung an den Systemdienst als Reaktion auf das Erkennen der Seiteninformationsabfrageanforderung, um den Systemdienst anzuweisen, die Systeminformationen des Endgeräts zu erfassen.

12. Verfahren nach einem der vorherigen Ansprüche, wobei
der Systemdienst ein Modul zur lokalen Informationserfassung ist, das in einer Systemschicht bereitgestellt ist, oder eine native Anwendung des Endgeräts,
und/oder
wobei die Systeminformationen mindestens eines der folgenden umfassen: Herstellerinformationen des Endgeräts; Versionsinformationen des vom Endgerät verwendeten Betriebssystems; und charakteristische Seiteninformationen, die vom Hersteller des Endgeräts für das Betriebssystem entworfen wurden,
und/oder
wobei der bestimmte Typ eine Drittanbieteranwendung umfasst.

13. Verfahren nach einem der vorherigen Ansprüche, wobei
die Anzeigeanweisung von der Ziel-Anwendung durch Scannen eines zweidimensionalen Codes generiert wird, der der Zielseite entspricht; oder
die Anzeigeanweisung von der Ziel-Anwendung basierend auf einer Website generiert wird, die der Zielseite in einer Anwendungsseite der Ziel-Anwendung entspricht.

14. Elektronische Vorrichtung, umfassend:
einen Prozessor; und
einen Speicher, der vom Prozessor ausführbare Anweisungen speichert;
wobei die Anweisungen, wenn sie vom Prozessor ausgeführt werden, den Prozessor veranlassen, das Verfahren nach einem der Ansprüche 1 bis 13 zu implementieren.

15. Nicht-flüchtiges computerlesbares Speichermedium, auf dem Anweisungen gespeichert sind, die, wenn sie von einem Prozessor ausgeführt werden, den Prozessor veranlassen, das Verfahren nach einem der Ansprüche 1 bis 13 zu implementieren.

## Revendications

1. Procédé d'affichage de page exécuté par un terminal comprenant une application cible d'un type spécifique et un service système, où l'application du type spécifique ne peut pas accéder aux informations système, comprenant :
la génération (102), en réponse à une instruction d'affichage pour une page cible provenant de l'application cible du type spécifique, d'une demande d'acquisition d'informations de page pour la page cible ;
en réponse à la détection de la demande d'acquisition d'informations de page, l'acquisition (104), par le service système, des informations système du terminal et la fourniture des informations système à l'application cible, où le service système est un service dans un système d'exploitation ayant la permission d'acquérir les informations système ; et
en réponse à l'acquisition des informations de page et des informations système, l'affichage (106), par l'application cible, de la page cible sur la base des informations de page et des informations système.

2. Procédé selon la revendication 1, dans lequel, en réponse à la détection de la demande d'acquisition d'informations de page, l'acquisition (104), par le service système, des informations système du terminal et la fourniture des informations système à l'application cible comprennent :
la surveillance, par le service système, d'une demande générée conformément à une indication d'une application du type spécifique ;
en réponse à la surveillance d'une demande générée conformément à une indication de l'application cible, l'acquisition, par le service système, des informations système du terminal ; et
la fourniture, par le service système, des informations système acquises à l'application cible.

3. Procédé selon la revendication 2, dans lequel
la demande surveillée par le service système et générée conformément à l'indication de l'application cible est la demande d'acquisition d'informations de page ; ou
le procédé comprend en outre : la génération, en réponse à la détection de la demande d'acquisition d'informations de page, d'une demande d'acquisition d'informations système pour indiquer l'acquisition des informations système, et la demande surveillée par le service système et générée conformément à l'indication de l'application cible est la demande d'acquisition d'informations système,
de préférence, la demande d'acquisition d'informations de page ou la demande d'acquisition d'informations système est une demande JS.

4. Procédé selon la revendication 2 ou 3, comprenant en outre :
la fourniture de la demande générée conformément à l'indication de l'application du type spécifique à un module de transfert de demande, de sorte que le module de transfert de demande fasse correspondre, selon une règle de transfert de demande maintenue par le terminal, la demande générée ; et
en réponse au fait que la demande correspond à une relation de mappage dans la règle de transfert de demande, le transfert de la demande sur la base de la relation de mappage,
de préférence, le module de transfert de demande comprend un noyau NetFilter, et la règle de transfert de demande comprend une table IP maintenue dans le noyau NetFilter.

5. Procédé selon l'une quelconque des revendications 2 à 4, comprenant en outre :
l'envoi de la demande générée conformément à l'indication de l'application du type spécifique à un port spécifique préconfiguré pour le service système ;
dans lequel la surveillance, par le service système, de la demande générée conformément à l'indication de l'application du type spécifique comprend : l'acquisition, par le service système, de la demande générée conformément à l'indication de l'application du type spécifique en surveillant le port spécifique.

6. Procédé selon l'une quelconque des revendications précédentes, comprenant en outre :
la génération, en réponse à la détection de la demande d'acquisition d'informations de page, d'une demande d'acquisition d'informations système pour indiquer l'acquisition des informations système ; et
l'indication au service système d'acquérir les informations système en envoyant la demande d'acquisition d'informations système générée au service système.

7. Procédé selon la revendication 6, dans lequel
une règle de transfert de demande déployée dans le terminal comprend : l'envoi, au service système, d'une demande initiée conformément à une indication d'une application du type spécifique pour acquérir les informations système ;
l'envoi de la demande d'acquisition d'informations système générée au service système comprend : l'envoi de la demande d'acquisition d'informations système au service système sur la base de la règle de transfert de demande ; et
l'acquisition, par le service système, des informations système du terminal comprend : en réponse à la réception de la demande d'acquisition d'informations système, l'acquisition, par le service système, des informations système du terminal.

8. Procédé selon la revendication 7, comprenant en outre :
la configuration, par le service système, de la règle de transfert de demande du terminal, et selon la règle de transfert de demande configurée par le service système, l'envoi, au service système, de la demande initiée conformément à l'indication de l'application du type spécifique pour acquérir les informations système du terminal.

9. Procédé selon la revendication 8, dans lequel
la configuration, par le service système, de la règle de transfert de demande du terminal comprend : la configuration, par le service système, d'une relation de mappage entre une IP de terminal du terminal et un port spécifique dans le terminal dans la règle de transfert de demande du terminal, de sorte que le terminal transfère, sur la base de la relation de mappage, la demande générée pour acquérir les informations système du terminal ; et
en réponse à la réception de la demande d'acquisition d'informations système, l'acquisition, par le service système, des informations système du terminal comprend : la surveillance, par le service système, du port spécifique, et en réponse à la surveillance de la demande pour acquérir les informations système du terminal, l'acquisition des informations système.

10. Procédé selon la revendication 9, dans lequel la configuration, par le service système, de la relation de mappage entre l'IP de terminal du terminal et le port spécifique dans le terminal dans la règle de transfert de demande du terminal comprend :
l'envoi, par le service système, d'une demande de configuration à un module de pare-feu du terminal, de sorte que le module de pare-feu ajoute, dans la règle de transfert de demande déployée, la relation de mappage entre l'IP de terminal du terminal et le port spécifique dans le terminal.

11. Procédé selon l'une quelconque des revendications précédentes, dans lequel, en réponse à la détection de la demande d'acquisition d'informations de page, l'acquisition, par le service système, des informations système du terminal comprend :
l'envoi d'une instruction d'acquisition d'informations système au service système pour indiquer au service système d'acquérir les informations système du terminal en réponse à la détection de la demande d'acquisition d'informations de page.

12. Procédé selon l'une quelconque des revendications précédentes, dans lequel le service système est un module d'acquisition d'informations locales déployé dans une couche système, ou une application native du terminal,
et/ou
dans lequel les informations système comprennent au moins l'un des éléments suivants : des informations sur le fabricant du terminal ; des informations de version du système d'exploitation pris en charge par le terminal ; et des informations de page caractéristiques conçues par un fabricant du terminal pour le système d'exploitation,
et/ou
dans lequel le type spécifique comprend une application tierce.

13. Procédé selon l'une quelconque des revendications précédentes, dans lequel
l'instruction d'affichage est générée par l'application cible en scannant un code bidimensionnel correspondant à la page cible ; ou
l'instruction d'affichage est générée par l'application cible sur la base d'un site web, correspondant à la page cible, dans une page d'application de l'application cible.

14. Dispositif électronique, comprenant :
un processeur ; et
une mémoire stockant des instructions exécutables par le processeur ;
dans lequel les instructions, lorsqu'elles sont exécutées par le processeur, amènent le processeur à mettre en œuvre le procédé selon l'une quelconque des revendications 1 à 13.

15. Support de stockage non transitoire lisible par ordinateur sur lequel sont stockées des instructions qui, lorsqu'elles sont exécutées par un processeur, amènent le processeur à mettre en œuvre le procédé selon l'une quelconque des revendications 1 à 13.
